(19) Europäisches Patentamt
European Patent Office
Office européen des brevets

(11) EP 3 361 392 A1

(12) EUROPEAN PATENT APPLICATION
published in accordance with Art. 153(4) EPC

(43) Date of publication:
15.08.2018 Bulletin 2018/33

(51) Int Cl.:
G06F 17/27 (2006.01)

(21) Application number: 16853101.0

(86) International application number:
PCT/CN2016/101447

(22) Date of filing: 08.10.2016

(87) International publication number:
WO 2017/059797 (13.04.2017 Gazette 2017/15)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD

(30) Priority: 10.10.2015 CN 201510652677

(71) Applicant: Alibaba Group Holding Limited
Grand Cayman (KY)

(72) Inventor: LU, Qing
Hangzhou 310099 (CN)

(74) Representative: Conroy, John
Fish & Richardson P.C.
Highlight Business Towers
Mies-van-der-Rohe-Straße 8
80807 München (DE)

(54) **METHOD AND DEVICE FOR ANALYZING ADDRESS**

(57) Embodiments of the present application relate to a method and an apparatus for address analysis. The method includes: determining first correlation values between n morphemes in a first address and m morphemes in a second address; obtaining a second correlation value between the first address and the second address based on the first correlation values and a preset algorithm; and analyzing a correlation between the first address and the second address based on the second correlation value. Thus, the accuracy and applicability of address analysis can be improved.

Input a first address and a second address, the first address including n morphemes and the second address including m morphemes — S110

Determine first correlation values between the n morphemes and the m morphemes — S120

Obtain a second correlation value between the first address and the second address based on the first correlation values and a preset algorithm — S130

Analyze a correlation between the first address and the second address based on the second correlation value — S140

**FIG. 1**

**Description**

The present application claims priority to Chinese Patent Application No. 201510652677.8, filed on October 10, 2015 and entitled "METHOD AND APPARATUS FOR ADDRESS ANALYSIS", which is incorporated herein by reference in its entirety.

**Technical Field**

The present application relates to the field of computer technologies, and in particular, to a method and an apparatus for address analysis.

**Background Art**

In conventional technologies, during address analysis, for example, when a correlation between two English addresses is analyzed, the two English addresses can be directly used as two long strings, and the correlation between the two English addresses can be analyzed by calculating an edit distance between the two long strings. Alternatively, the two English addresses can be pre-processed first. During pre-processing, words in each English address can be sorted based on their initials, and repeated words are deleted. Then, the pre-processed two English addresses are used as two long strings, and an edit distance between the two long strings is calculated. Finally, the correlation between the two English addresses is analyzed based on the edit distance.

However, the first method depends greatly on the positions of words in English addresses. Once a sequence reversal or repetition of the words occurs in the English addresses, the edit distance would be increased, affecting the accuracy of address analysis. Although the second method can reduce the impact of the sequence and repetition of the words, its dependence on the initials of words renders it inapplicable to English addresses containing non-native English contents, because a non-English word may have several different counterparts in English (for example, Hlinka and Glinka are both common English spellings of Глѝ Hкa in Russian).

**Summary of the Invention**

Embodiments of the present application provide a method and an apparatus for address analysis, which can improve the accuracy and applicability of address analysis.

In a first aspect, a method for address analysis is provided, which includes:

inputting a first address and a second address, the first address including n morphemes and the second address including m morphemes, wherein the morpheme is the smallest semantic unit in the address, and n and m are both natural numbers;
determining first correlation values between the n morphemes and the m morphemes;
obtaining a second correlation value between the first address and the second address based on the first correlation values and a preset algorithm; and
analyzing a correlation between the first address and the second address based on the second correlation value.

In a second aspect, an apparatus for address analysis is provided, which includes an input unit, a determination unit, an acquisition unit, and an analysis unit; the input unit is configured to input a first address and a second address, the first address including n morphemes and the second address including m morphemes, wherein the morpheme is the smallest semantic unit in the address, and n and m are both natural numbers; the determination unit is configured to determine first correlation values between the n morphemes and the m morphemes; the acquisition unit is configured to obtain a second correlation value between the first address and the second address based on the first correlation values determined by the determination unit and a preset algorithm; and the analysis unit is configured to analyze a correlation between the first address and the second address based on the second correlation value obtained by the acquisition unit.

According to the method and the apparatus for address analysis disclosed in the present application, first correlation values between n morphemes in a first address and m morphemes in a second address are determined; a second correlation value between the first address and the second address is obtained based on the first correlation values and a preset algorithm; and a correlation between the first address and the second address is analyzed based on the second correlation value. That is, in the present application, first correlation values between morphemes in two addresses are determined first, a second correlation value between the two addresses is then obtained based on the first correlation values and a preset algorithm, and finally the addresses are analyzed based on the second correlation value. Thus, the dependence on single words in the prior art where two addresses are used as two strings and an edit distance between the two strings is calculated to analyze a correlation between the addresses can be avoided. Therefore, the accuracy and applicability of address analysis can be improved.

**Brief Description of the Drawings**

FIG. 1 is a flowchart of a method for address analysis according to an embodiment of the present application; and

FIG. 2 is a schematic diagram of an apparatus for address analysis according to another embodiment of the present application.

**Detailed Description**

In order to make the objectives, technical solutions, and advantages of the embodiments of the present application more comprehensible, the technical solutions in the embodiments of the present application will be clearly and fully described below with reference to the accompanying drawings in the embodiments of the present application. It is apparent that the embodiments to be described are merely some of rather than all the embodiments of the present application. Based on the embodiments of the present application, all other embodiments derived by those of ordinary skill in the art without creative efforts should fall within the protection scope of the present application.

To facilitate understanding the embodiments of the present application, further explanations are provided below by using specific embodiments with reference to the accompanying drawings. The embodiments do not pose any limitation to the embodiments of the present application.

A method and an apparatus for address analysis according to the embodiments of the present application are applied to scenarios where a correlation between addresses is analyzed. The correlation here can include difference and similarity. For example, the method and the apparatus for address analysis can be used to analyze a correlation between addresses in an e-commerce transaction of physical goods.

It should be noted that the analysis result of the correlation between addresses can be the foundation for cluster analysis, term frequency analysis, address standardization, and the like.

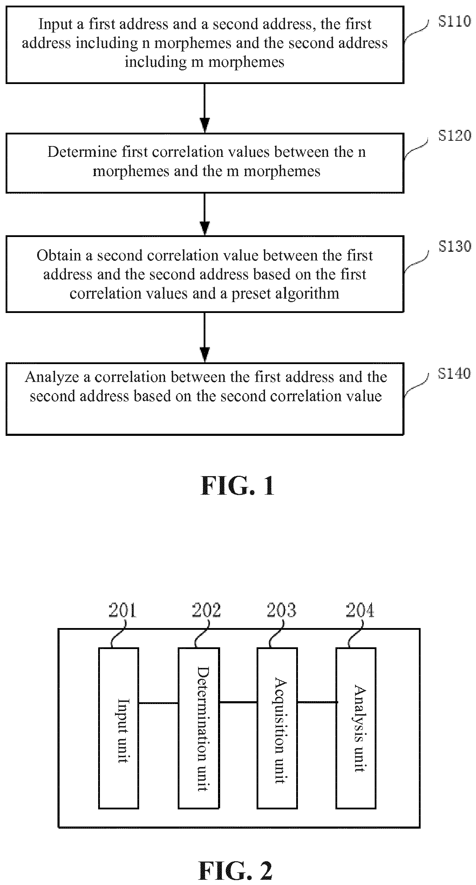

FIG. 1 is a flowchart of a method for address analysis according to an embodiment of the present application. The method can be performed by a device having a processing capability, e.g., a server, a system, or an apparatus. As shown in FIG. 1, the method can specifically include the following steps.

Step 110: A first address and a second address are input, the first address including n morphemes and the second address including m morphemes, wherein the morpheme is the smallest semantic unit in the address, and n and m are both natural numbers.

Here, the first address and the second address have the same definition. For example, the first address can include a Chinese address, an English address, or the like. For a Chinese address, standardization needs to be performed first. For example, traditional Chinese characters are converted into simplified Chinese characters. Then, the standardized Chinese address is segmented into n terms, and the n terms are used as n morphemes. For an English address, n words included in the first address can be directly used as n morphemes.

It can be understood that when the first address or the second address is a Chinese address, one term can be used as one morpheme; and when the first address or the second address is an English address, one word can be used as one morpheme.

Step 120: First correlation values between the n morphemes and the m morphemes are determined.

Here, the first correlation value includes a difference value and a similarity value. The difference value can include an edit distance value. The similarity value can include a hamming distance value, a Jaccard distance value, an N-Gram distance value, a Jaro-Winkler (JW) distance value, or a cosine distance value. In this specification, for example, the first correlation value is an edit distance value. The edit distance value indicates an edit distance between two morphemes, and refers to the number of edit transformations (including delete transformation, insert transformation, replace transformation, and so on) required for changing one morpheme into another morpheme. It can be calculated based on a classic edit distance algorithm, or calculated based on an adjusted edit distance algorithm (for example, increase the difference of replace transformation or reduce the difference of lack of vowel or the like). For example, assuming that one morpheme is cafe and another morpheme is coffee, a process of changing cafe into coffee is: cafe → caffe → coffe → coffee, that is, three edit transformations are required. Therefore, an edit distance value between cafe and coffee is 3.

It should be noted that when the first address or the second address is a Chinese address, before step 120 is performed, morphemes included in the first address or the second address can also be processed as follows:

By using the first address as an example, each morpheme (i.e., term) in the first address can be transformed into phonetic alphabets or strokes. That is, the processed first address can include n groups of phonetic alphabets or n groups of strokes. Then, first correlation values between the n groups of phonetic alphabets included in the first address and m groups of phonetic alphabets included in the second address are determined, or first correlation values between the n groups of strokes included in the first address and m groups of strokes included in the second address are determined. The determination method is similar to the method for determining the first correlation values between n words included in the first address and m words included in the second address, which is not repeated in the present application.

Step 120 can specifically include:

First correlation values between each of the n morphemes and the m morphemes are determined to obtain n×m first correlation values.

Step 120 can also be described as the following steps:

1) an $i^{th}$ morpheme in the n morphemes is obtained in sequence, where i=1, 2, ..., n;

2) a $j^{th}$ morpheme in the m morphemes is obtained in sequence, where j=1, 2, ..., m;
3) a first correlation value between the $i^{th}$ morpheme and the $j^{th}$ morpheme is calculated; and
4) all the n morphemes and all the m morphemes are traversed to obtain n×m first correlation values.

For example, both the first address and the second address are English addresses. That is, the first address includes n words, and the second address includes m words. Assume that n is 3, and 3 words included in the first address are respectively X, Y, and Z. Assume that m is 4, and 4 words included in the second address are respectively A, B, C, and D. First correlation values between X and the four morphemes A, B, C, and D are determined respectively; first correlation values between Y and the four morphemes A, B, C, and D are determined respectively; and first correlation values between Z and the four morphemes A, B, C, and D are determined respectively. Finally, 3×4 first correlation values are obtained. When the first correlation value between X and A can be indicated as d(A, X), the obtained 3×4 first correlation values can be as shown in Table 1.

Table 1

|   | A | B | C | D |
|---|---|---|---|---|
| X | d(A, X) | d(B, X) | d(C, X) | d(D, X) |
| Y | d(A, Y) | d(B, Y) | d(C, Y) | d(D, Y) |
| Z | d(A, Z) | d(B, Z) | d(C, Z) | d(D, Z) |

Step 130: A second correlation value between the first address and the second address is obtained based on the first correlation values and a preset algorithm.
Here, the preset algorithm can include a Hungary algorithm, an exhaustion algorithm, or the like. In this specification, the preset algorithm is a Hungary algorithm.
Step 130 can specifically include:
Step A: A second morpheme best matching with a first morpheme in the n morphemes is selected from the m morphemes based on the n×m first correlation values and the preset algorithm, and a target correlation value between the first morpheme and the second morpheme is recorded until n target correlation values are recorded.
Here, the first morpheme is any morpheme in the first address. It can be understood that when the first address includes n morphemes, the number of the first morphemes is n, and the number of the second morphemes matching with the first morphemes is n. Therefore, the number of recorded target correlation values is also n.
That a second morpheme best matching with a first morpheme in the n morphemes is selected from the m morphemes based on the n×m first correlation values and the preset algorithm in step A can further include:

an n×m matrix is constructed based on the n×m first correlation values;
the n×m matrix is pre-processed based on the preset algorithm; and
the second morpheme best matching with the first morpheme in the n morphemes is selected from the m morphemes based on the pre-processed n×m matrix.

It should be noted that when the first correlation value is an edit distance value, the process of selecting a second morpheme best matching with a first morpheme is solving the optimal matching problem of the edit distance value. That is, it is ensured that a corresponding word can be found in the second address for each word in the first address, and the overall difference value is the minimum.
When the optimal matching problem of the edit distance value is solved, the pre-processing can include subtracting the smallest element of each row in a matrix from this row of elements and/or subtracting the smallest element of each column from this column of elements, and so on.
Specifically, if the first correlation value between the $i^{th}$ morpheme and the $j^{th}$ morpheme is used as an element in the $i^{th}$ row, the $j^{th}$ column of a matrix, a matrix constructed by the 3×4 first correlation values in the foregoing example is shown as follows:

$$\begin{bmatrix} 3 & 5 & 1 & 2 \\ 4 & 3 & 5 & 3 \\ 4 & 2 & 2 & 4 \end{bmatrix}$$

Moreover, after the matrix is pre-processed based on a preset algorithm, the following matrix is obtained:

$$\begin{bmatrix} 1 & 4 & 0 & 1 \\ 0 & 0 & 2 & 0 \\ 1 & 0 & 0 & 2 \end{bmatrix}$$

It should be noted that the process of pre-processing the matrix belongs to the prior art and is not described in detail here. In addition, an independent zero element in each row is marked in the matrix finally obtained. That is, 0 in the first row, the third column is marked, 0 in the second row, the first column is marked, and 0 in the third row, the second column is marked, so that an optimal matching combination between morphemes in two addresses can be obtained. Table 1 can be updated to Table 2 based on the pre-processed matrix and the marked independent zero elements.

Table 2

|   | A | B | C | D |
|---|---|---|---|---|
| X | 1 | 4 | <u>0</u> | 1 |
| Y | <u>0</u> | 0 | 2 | 0 |
| Z | 1 | <u>0</u> | 0 | 2 |

The underlined 0 is an independent zero element marked in the pre-processed matrix. It can be seen from Table 2 that when the first morpheme is X, the second morpheme best matching with the first morpheme is C, and a target correlation value d(C, X) between X and C is recorded. When the first morpheme is Y, the second morpheme best matching with the first morpheme is A, and a target correlation value d(A, Y) between Y and A is recorded. When the first morpheme is Z, the second morpheme best matching with the first morpheme is B, and a target correlation value d(B, Z) between Z and B is recorded. That is, 3 target correlation values can be recorded.

Step B: A second correlation value between the first address and the second address is obtained based on the n target correlation values.

In an example, the n target correlation values can be summed, and the sum of the n target correlation values is used as a second correlation value between the first address and the second address. As in the foregoing example, the second correlation value between the first address and the second address = d(C, X) + d(A, Y) + d(B, Z) = 1+4+2 = 7. Here, 1, 4, and 2 are obtained based on Table 1.

Step 140: A correlation between the first address and the second address is analyzed based on the second correlation value.

It can be understood that the second correlation value can also include a difference value and a similarity value.

It should be noted that when the second correlation value determined in step 130 is a difference value, a greater second correlation value between the first address and the second address can indicate a smaller similarity between these two addresses. When the second correlation value determined in step 130 is a similarity value, the first address and the second address are more similar to each other if the similarity value between these two addresses is closer to 1, and the first address and the second address are less similar to each other if the similarity value between these two addresses is closer to 0. In addition, when the second correlation value determined in step 130 is a similarity value, the similarity value can be converted into a difference value by calculating the log of the similarity value and obtaining a negative value of the log.

In addition, the analysis result of the correlation in the present application can be the foundation for cluster analysis, term frequency analysis, address standardization, and the like.

According to the method for address analysis disclosed in the present application, first correlation values between n morphemes in a first address and m morphemes in a second address are determined; a second correlation value between the first address and the second address is obtained based on the first correlation values and a preset algorithm; and a correlation between the first address and the second address is analyzed based on the second correlation value. Thus, the accuracy and applicability of address analysis can be improved.

In summary, for offshore transaction orders for physical goods in e-commerce transactions, a subtle distinction in spelling, a habit of writing order, and other current conditions of a delivery address written in English, especially a delivery address in a non-native English speaking region, bring a great challenge to the analysis of address correlation. Therefore, the method for address analysis disclosed in the present application is necessary.

Corresponding to the method for address analysis, an embodiment of the present application further provides an apparatus for address analysis. As shown in FIG. 2, the apparatus includes: an input unit 201, a determination unit 202, an acquisition unit 203, and an analysis unit 204.

The input unit 201 is configured to input a first address and a second address, the first address including n morphemes and the second address including m morphemes, wherein the morpheme is the smallest semantic unit in the address, and n and m are both natural numbers.

The determination unit 202 is configured to determine first correlation values between the n morphemes and the m morphemes.

The determination unit 202 is specifically configured to:
determine first correlation values between each of the n morphemes and the m morphemes to obtain n×m first correlation values.

The first correlation value includes: an edit distance value, a hamming distance value, a Jaccard distance value, an N-Gram distance value, a JW distance value, or a cosine distance value.

The acquisition unit 203 is configured to obtain a second correlation value between the first address and the second address based on the first correlation values determined by the determination unit 202 and a preset algorithm.

The acquisition unit 203 is specifically configured to:

select a second morpheme best matching with a first morpheme in the n morphemes from the m morphemes based on the n×m first correlation values and the preset algorithm, and record a target correlation value between the first morpheme and the second morpheme until n target correlation values are recorded; and

obtain a second correlation value between the first address and the second address based on the n target correlation values.

The step of selecting a second morpheme best matching with a first morpheme in the n morphemes from the m morphemes based on the n×m first correlation values and the preset algorithm includes:

constructing an n×m matrix based on the n×m first correlation values;
pre-processing the n×m matrix based on the preset algorithm; and
selecting the second morpheme best matching with the first morpheme in the n morphemes from the m morphemes based on the pre-processed n×m matrix.

The analysis unit 204 is configured to analyze a correlation between the first address and the second address based on the second correlation value obtained by the acquisition unit 203.

In the apparatus for address analysis according to the embodiment of the present application, the input unit 201 is configured to input a first address and a second address, the first address including n morphemes and the second address including m morphemes, wherein the morpheme is the smallest semantic unit in the address, and n and m are both natural numbers; the determination unit 202 is configured to determine first correlation values between the n morphemes and the m morphemes; the acquisition unit 203 is configured to obtain a second correlation value between the first address and the second address based on the determined first correlation values and a preset algorithm; the analysis unit 204 is configured to analyze a correlation between the first address and the second address based on the second correlation value. Thus, the accuracy and applicability of address analysis can be improved.

Those skilled in the art should also be aware that units and algorithm steps in examples described with reference to the embodiments disclosed in this specification can be implemented by an electronic hardware, a computer software, or a combination of both. To clearly illustrate the interchangeability between hardware and software, the composition and steps of each example have been described in general according to functions in the foregoing description. Whether these functions are implemented by using hardware or software depends on a specific application and design constraint conditions of the technical solution. For each specific application, those skilled in the art can use different methods to implement the described functions. However, such implementation should not be considered as exceeding the scope of the present application.

Steps of the method or algorithm described with reference to the embodiments disclosed in this specification can be implemented by hardware, a software module executed by a processor, or a combination thereof. The software module can be stored in a random access memory (RAM), a memory, a read-only memory (ROM), an electrically programmable ROM, an electrically erasable programmable ROM, a register, a hard drive, a removable disk, a CD-ROM, or any other form of storage medium commonly known in the art.

The foregoing specific implementations provide further detailed descriptions of the objectives, technical solutions, and beneficial effects of the present application. It should be understood that the contents described above are merely specific implementations of the present application, which are not intended to limit the protection scope of the present application. Any modifications, equivalent replacements, improvements, and the like made within the spirit and principle of the present application shall be included in the protection scope of the present application.

**Claims**

1. A method for address analysis, comprising:

   inputting a first address and a second address, the first address comprising n morphemes and the second address comprising m morphemes, wherein the morpheme is the smallest semantic unit in the address, and n and m are both natural numbers;
   determining first correlation values between the n morphemes and the m morphemes;
   obtaining a second correlation value between the first address and the second address based on the first correlation values and a preset algorithm; and
   analyzing a correlation between the first address and the second address based on the second correlation value.

2. The method of claim 1, wherein the step of determining first correlation values between the n morphemes and the m morphemes comprises:
   determining first correlation values between each of the n morphemes and the m morphemes to obtain n×m first correlation values.

3. The method of claim 2, wherein the step of obtaining a second correlation value between the first address and the second address based on the first correlation values and a preset algorithm comprises:

   selecting a second morpheme best matching with a first morpheme in the n morphemes from the m morphemes based on the n×m first correlation values and the preset algorithm, and recording a target correlation value between the first morpheme and the second morpheme until n target correlation values are recorded; and obtaining a second correlation value between the first address and the second address based on the n target correlation values.

4. The method of claim 3, wherein the step of selecting a second morpheme best matching with a first morpheme in the n morphemes from the m morphemes based on the n×m first correlation values and the preset algorithm comprises:

constructing an n×m matrix based on the n×m first correlation values;
pre-processing the n×m matrix based on the preset algorithm; and
selecting the second morpheme best matching with the first morpheme in the n morphemes from the m morphemes based on the pre-processed n×m matrix.

5. The method of any of claims 1 to 4, wherein the first correlation value comprises:
an edit distance value, a hamming distance value, a Jaccard distance value, an N-Gram distance value, a JW distance value, or a cosine distance value.

6. An apparatus for address analysis, comprising an input unit, a determination unit, an acquisition unit, and an analysis unit;
wherein the input unit is configured to input a first address and a second address, the first address comprising n morphemes and the second address comprising m morphemes, wherein the morpheme is the smallest semantic unit in the address, and n and m are both natural numbers;
the determination unit is configured to determine first correlation values between the n morphemes and the m morphemes;
the acquisition unit is configured to obtain a second correlation value between the first address and the second address based on the first correlation values determined by the determination unit and a preset algorithm; and
the analysis unit is configured to analyze a correlation between the first address and the second address based on the second correlation value obtained by the acquisition unit.

7. The apparatus of claim 6, wherein the determination unit is specifically configured to:
determine first correlation values between each of the n morphemes and the m morphemes to obtain n×m first correlation values.

8. The apparatus of claim 7, wherein the acquisition unit is specifically configured to:

select a second morpheme best matching with a first morpheme in the n morphemes from the m morphemes based on the n×m first correlation values and the preset algorithm, and record a target correlation value between the first morpheme and the second morpheme until n target correlation values are recorded; and
obtain a second correlation value between the first address and the second address based on the n target correlation values.

9. The apparatus of claim 8, wherein the step of selecting a second morpheme best matching with a first morpheme in the n morphemes from the m morphemes based on the n×m first correlation values and the preset algorithm comprises:

constructing an n×m matrix based on the n×m first correlation values;
pre-processing the n×m matrix based on the preset algorithm; and
selecting the second morpheme best matching with the first morpheme in the n morphemes from the m morphemes based on the pre-processed n×m matrix.

10. The apparatus of any of claims 6 to 9, wherein the first correlation value comprises:
an edit distance value, a hamming distance value, a Jaccard distance value, an N-Gram distance value, a JW distance value, or a cosine distance value.

```
┌─────────────────────────────────────────────┐
│ Input a first address and a second address,  │ ⟋ S110
│ the first address including n morphemes and  │
│ the second address including m morphemes     │
└─────────────────────────────────────────────┘
                      │
                      ▼
┌─────────────────────────────────────────────┐
│ Determine first correlation values between   │ ⟋ S120
│ the n morphemes and the m morphemes          │
└─────────────────────────────────────────────┘
                      │
                      ▼
┌─────────────────────────────────────────────┐
│ Obtain a second correlation value between    │ ⟋ S130
│ the first address and the second address     │
│ based on the first correlation values and    │
│ a preset algorithm                           │
└─────────────────────────────────────────────┘
                      │
                      ▼
┌─────────────────────────────────────────────┐
│ Analyze a correlation between the first      │ ⟋ S140
│ address and the second address based on the  │
│ second correlation value                     │
└─────────────────────────────────────────────┘
```

**FIG. 1**

```
   201       202        203        204
┌──────────────────────────────────────────┐
│ ┌──────┐ ┌──────────┐ ┌──────────┐ ┌──────┐│
│ │      │ │          │ │          │ │      ││
│ │Input │ │Determina-│ │Acquisi-  │ │Analy-││
│ │unit  │ │tion unit │ │tion unit │ │sis   ││
│ │      │ │          │ │          │ │unit  ││
│ └──────┘ └──────────┘ └──────────┘ └──────┘│
└──────────────────────────────────────────┘
```

**FIG. 2**

# INTERNATIONAL SEARCH REPORT

| International application No. |
| --- |
| **PCT/CN2016/101447** |

### A. CLASSIFICATION OF SUBJECT MATTER

G06F 17/27 (2006.01) i

According to International Patent Classification (IPC) or to both national classification and IPC

### B. FIELDS SEARCHED

Minimum documentation searched (classification system followed by classification symbols)

G06F

Documentation searched other than minimum documentation to the extent that such documents are included in the fields searched

Electronic data base consulted during the international search (name of data base and, where practicable, search terms used)

CNPAT, CNKI, WPI, EPODOC, GOOGLE: character string, matching degree, association degree, N-Gram distance, string, text, address, similarity, matching, association, edit distance, matrix, Hamming distance, Jaccard distance, JW distance, cosine distance

### C. DOCUMENTS CONSIDERED TO BE RELEVANT

| Category* | Citation of document, with indication, where appropriate, of the relevant passages | Relevant to claim No. |
| --- | --- | --- |
| X | CN 103399907 A (AUDAQUE DATA TECHNOLOGY LTD.), 20 November 2013 (20.11.2013), description, paragraphs 18-50 | 1-2, 5-7, 10 |
| A | CN 104679728 A (CHINA AGRICULTURAL UNIVERSITY), 03 June 2015 (03.06.2015), the whole document | 1-10 |
| A | CN 104699668 A (XIAOMI TECHNOLOGY CO., LTD.), 10 June 2015 (10.06.2015), the whole document | 1-10 |
| A | CN 103425640 A (HUAWEI TECHNOLOGIES CO., LTD.), 04 December 2013 (04.12.2013), the whole document | 1-10 |
| A | US 5423032 A (INTERNATIONAL BUSINESS MACHINES CORPORATION), 06 June 1995 (06.06.1995), the whole document | 1-10 |

☐ Further documents are listed in the continuation of Box C. ☒ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 21 December 2016 (21.12.2016) | **05 January 2017 (05.01.2017)** |

| Name and mailing address of the ISA/CN:<br>State Intellectual Property Office of the P. R. China<br>No. 6, Xitucheng Road, Jimenqiao<br>Haidian District, Beijing 100088, China<br>Facsimile No.: (86-10) 62019451 | Authorized officer<br>**DONG, Libo**<br>Telephone No.: (86-10) **61648110** |
| --- | --- |

Form PCT/ISA/210 (second sheet) (July 2009)

## INTERNATIONAL SEARCH REPORT
Information on patent family members

International application No.

**PCT/CN2016/101447**

| Patent Documents referred in the Report | Publication Date | Patent Family | Publication Date |
|---|---|---|---|
| CN 103399907 A | 20 November 2013 | WO 2015014287 A1 | 05 February 2015 |
| CN 104679728 A | 03 June 2015 | None | |
| CN 104699668 A | 10 June 2015 | None | |
| CN 103425640 A | 04 December 2013 | US 2015074112 A1 | 12 March 2015 |
| | | WO 2013170587 A1 | 21 November 2013 |
| | | EP 2833271 A1 | 04 February 2015 |
| US 5423032 A | 06 June 1995 | None | |

Form PCT/ISA/210 (patent family annex) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201510652677